# EUROPEAN PATENT APPLICATION

(11) **EP 4 395 033 A1**
(43) Date of publication of application: **03.07.2024**
(21) Application number: 22948210.4
(22) Date of filing: 27.06.2022
(51) Int. Cl.: H01M 50/271, H01M 50/258

(54) **BATTERY AND ELECTRIC APPARATUS**

(71) Applicant: Contemporary Amperex Technology Co., Limited, Ningde, Fujian 352100 (CN)
(72) Inventor: CHEN, Xingdi, Ningde, Fujian 352100 (CN); WANG, Peng, Ningde, Fujian 352100 (CN); LONG, Chao, Ningde, Fujian 352100 (CN)
(74) Representative: von Tietzen und Hennig, Nikolaus
(86) International application number: PCT/CN2022/101393
(87) International publication number: WO 2024/000085

(57) **Abstract**

The present application discloses a battery and an electrical apparatus. The battery of embodiments of the present application comprises: a box having a top and a bottom opposite in a first direction; a battery cell disposed upside down in the box and connected to the top, wherein the battery cell comprises electrode terminals, the electrode terminals being disposed back away from the top in the first direction; a busbar component for electrically connecting to the electrode terminals of at least two said battery cells; and a protective assembly disposed between the bottom and the busbar component, wherein the protective assembly is used for supporting the battery cell and insulating the battery cell from the bottom. The battery provided in embodiments of the present application can improve the strength and the safety of the battery.

## Description

### TECHNICAL FIELD

The present application relates to the field of batteries, and in particular to a battery and an electrical apparatus.

### BACKGROUND ART

With the joint development of technologies in the field of vehicles and batteries, the number of driving methods for carriers in the market is gradually increasing, and the market share of electrically driven carriers is gradually increasing in order to minimize pollution and reduce costs. On this basis, in order to reduce the thickness of the chassis and increase the internal space of the electrically driven carrier, the technology of integrating the battery with the chassis has already appeared, and in the process of driving the carrier, the bottom of the battery may suffer from external impacts, which cause the battery to be deformed in the process of usage, thus leading to the potential risk of safety accidents.

Therefore, there is an urgent need for a battery with high safety performance and the corresponding electrical apparatus.

### SUMMARY OF THE INVENTION

The present application provides a battery and an electrical apparatus, wherein the battery has a high top strength, and can thus improve the safety factor.

In a first aspect, the present application provides a battery, comprising: a box having a top and a bottom opposite in a first direction; a battery cell disposed upside down in the box and connected to the top, wherein the battery cell comprises electrode terminals, the electrode terminals being disposed back away from the top in the first direction; a busbar component for electrically connecting to the electrode terminals of at least two said battery cells; and a protective assembly disposed between the bottom and the busbar component, wherein the protective assembly is used for supporting the battery cell and insulating the battery cell from the bottom.

In the battery provided in embodiments of the present application, the battery cell is disposed upside down in the interior of the box, and by connecting a flat bottom surface of the battery cell that is not provided with electrode terminals to the top of the box and providing a protective assembly for supporting between the battery cell and the bottom of the box, collisions between components such as the electrode terminals in the battery cell and other components can be avoided when the battery is subj ected to external impact, and by connecting the battery cell to the top of the box, collisions between the battery cell and the top of the box can be avoided when the battery is subjected to bottom impact, thereby effectively improving the strength of the top end of the battery to ensure the safety of the battery as a whole.

According to an aspect of embodiments of the present application, the battery cell is bonded and fixed to the top. By bonding the bottom of the battery to the top, the strength of the top of the battery can be further improved.

According to an aspect of embodiments of the present application, the top comprises a top plate and a frame, the frame being disposed surrounding multiple said battery cells, and the frame being used to connect the top plate and the bottom. The frame disposed surrounding the battery cells can provide protection on the side of the battery cell and improve safety.

According to an aspect of embodiments of the present application, the protective assembly comprises a plurality of protective members extending in a second direction, the plurality of the protective members being disposed at intervals in a third direction and the battery cell being abutted against the protective members, with the first direction, the second direction, and the third direction being arranged to intersect with each other. The protective assembly may comprise a plurality of protective members that are abutted against the plurality of battery cells, respectively, so that the battery cells and the bottom of the box can maintain a certain distance from each other, thus reducing the influence of the bottom impact on the battery.

According to an aspect of embodiments of the present application, orthographic projections of the electrode terminals to the bottom are located between orthographic projections of the protective members adjacent thereto to the bottom. After the battery cell is lifted by the protective assembly, the electrode terminals fall between the adjacent protective assemblies, thus avoiding impact damage to the electrode terminals.

According to an aspect of embodiments of the present application, the plurality of protective members comprise edge protective members, first protective members, and second protective members, wherein along the third direction, the edge protective members are disposed at edges on the two sides of an assembly of battery cells arranged in an array, and the first protective members and the second protective members are distributed alternately between two said edge protective members. By providing protective members at the edges, corners can be prevented from being damaged by collisions, and the first and second protective members, which are provided alternately, can be used in cooperation with the setting of the busbar component to form a connection loop with safe electrical performance.

According to an aspect of embodiments of the present application, along the second direction, an extension length of the first protective members is greater than an extension length of the second protective members. Between the second protective members having the shorter extension length, a connecting element in the busbar component that is used to electrically connect the battery cells to each other may be provided, so as to provide protection for the connecting element by the protective assembly and to improve the reliability of the electrical connection.

According to an aspect of embodiments of the present application, along the third direction, the width of the first protective members is greater than the width of the second protective members, and the width of the second protective members is greater than the width of the edge protective members. Each of the first protective members can be simultaneously abutted against two battery cells adjacent thereto to improve the machining efficiency.

According to an aspect of embodiments of the present application, an extension length of the protective assembly in the first direction is greater than 1.5 mm. By making the protective assembly extend beyond a certain length in the first direction, it is possible to effectively improve the safety of the electrical performance inside the battery when the bottom of the battery is impacted.

According to an aspect of embodiments of the present application, the protective assembly further comprises a connecting plate, the plurality of protective members being separately disposed on a surface of the connecting plate towards the top. The plurality of protective members may be all connected to the connecting plate, and by means of the connecting plate, it is possible to stabilize the relative positions between the plurality of protective assemblies and to improve the insulating performance between the busbar component and the bottom of the box.

According to an aspect of embodiments of the present application, the frame and the top plate are disposed by means of a welding connection, a flow drill screw connection, a bonding connection, a fastener connection, or an integral molding. The frame and the top plate can be disposed in a fixed connection or an integral molding, so as to improve the connection strength of the overall structure.

According to an aspect of embodiments of the present application, the protective assembly is bonded and fixed to the battery cell. The lower end of the battery cell can be bonded and fixed to the protective assembly to further improve the overall connection strength.

According to an aspect of embodiments of the present application, the battery cell further comprises a pressure relief mechanism, the pressure relief mechanism being disposed on the same side as the electrode terminals. By providing the pressure relief mechanism also on the lower side of the battery cell, it is possible to protect it together with the electrode terminals, thus improving the safety.

According to an aspect of embodiments of the present application, an orthographic projection of the pressure relief mechanism to the bottom is located between orthographic projections of the protective members adjacent thereto to the bottom. Similarly to the electrode terminals, by disposing the pressure relief valve between protective members adjacent thereto, it is possible to reduce the probability of the pressure relief mechanism being subjected to collision shocks.

According to an aspect of embodiments of the present application, the protective assembly is of an insulating material, or the protective assembly is coated with an insulating coating. The protective assembly enables electrical insulation between the busbar component and the bottom of the box, thereby avoiding impact on the electrical connections between the battery cells caused by external stimulation of the bottom of the box.

According to an aspect of embodiments of the present application, the battery further comprises an adapter plate and an adapter, wherein the adapter plate is disposed on one side of the box and is disposed to protrude from the box, and the adapter plate is connected to the bottom to form an accommodating part, and the adapter is disposed in the accommodating part and is disposed to be connected to the adapter plate. By providing the adapter in the accommodating part, it is possible to protect the adapter by means of the box, thereby reducing the probability of the adapter being damaged by collision.

In a second aspect, the present application provides an electrical apparatus comprising the battery of any of the embodiments in the first aspect.

In the technical solution provided in embodiments of the present application, the battery module is disposed upside down in the box, and the flat bottom surface of the battery module itself and the top of the box of the battery are connected and fixed to each other, and at the same time, a protective assembly is provided between the battery cell and the bottom of the box to support the battery cell, thereby the structural strength of the interior of the battery can be improved and the battery can be prevented from having safety problems when it is subj ected to a collision or extrusion, thus improving the overall safety factor of the battery.

### DESCRIPTION OF DRAWINGS

Various other advantages and benefits will become apparent to those of ordinary skill in the art upon reading the following detailed description of the preferred implementations. The drawings are for the purpose of illustrating the preferred implementations only and are not to be considered a limitation to the present application. Moreover, in all of the accompanying drawings, the same parts are indicated by the same reference numerals. In the accompanying drawings:
Fig. 1 is a schematic structural diagram of a vehicle provided in some embodiments of the present application;
Fig. 2 is a schematic structural diagram of a battery provided in some embodiments of the present application;
Fig. 3 is an exploded view of a battery provided in an embodiment of the present application;
Fig. 4 is a schematic structural diagram of a bottom provided in an embodiment of the present application;
Fig. 5 is a schematic cross-sectional diagram of a battery provided in an embodiment of the present application;
Fig. 6 is a schematic structural diagram of a battery cell provided in another embodiment of the present application;
Fig. 7 is a schematic cross-sectional diagram of a battery provided in an embodiment of the present application;
Fig. 8 is an enlarged diagram of area A in Fig. 7;
Fig. 9 is a schematic structural diagram of a protective assembly provided in an embodiment of the present application; and
Fig. 10 is a schematic structural diagram of a battery provided in yet another embodiment of the present application.

Reference numerals in Detailed Description are as follows:
1000 - vehicle; 2000 - battery; 3000 - controller; 4000 - motor;
100 - box; 200 - battery cell; 300 - busbar component; 400 - protective assembly;
10 - top; 20 - bottom; 30 - electrode terminals; 40 - protective member; 50 - connecting plate; 60 - pressure relief mechanism; 70 - adapter plate; 80 - adapter; 90 - accommodating part;
11 - top plate; 12 - frame; 41 - edge protective member; 42 - first protective member; 43 - second protective member;
X - second direction; Y - third direction; Z - first direction.

### DETAILED DESCRIPTION

Examples of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the apparatus or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

With the development and innovation of technologies in the field of batteries, at present, the application of power batteries in the market is more and more extensive. The power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding. Taking electric transportation as an example, because of the large space required by batteries, the existing electric vehicles usually have the batteries arranged at the chassis position, and in order to expand the space inside the vehicle, structures for integrating the battery with the chassis of the transportation, such as the CTC (cell to chassis) technology, have accordingly appeared.

The applicant notes that the existing integrated design of the battery and the chassis usually connects and fixes the bottom of the battery cell to the bottom of the box of the battery, and at the same time arranges a connecting element at the top to connect the plurality of battery cells to each other. At this time, if the bottom of the vehicle is scratched or impacted in the process of driving, there is a possibility that the top of the battery cell may collide with the top of the box of the battery, which will easily lead to problems such as damage to the battery itself and damage to the connecting element, and therefore there is a possibility of fire and explosion when the shock is large, resulting in a potential safety hazard.

Based on the above considerations, in order to improve the strength of the top of the battery and improve safety, the applicant proposes a battery, which includes a box, and there are a battery cell, a busbar component, and a protective assembly disposed sequentially in the box, where the battery cell is disposed upside down and the bottom of the battery cell is connected to the top of the box, whereby the strength of the top of the box of the battery can be effectively improved. At the same time, the battery cell and the bottom of the box is provided with a protective assembly, which can avoid collisions of the batteries and the connecting elements between the batteries with the bottom, thus further improving the safety of the battery.

The technical solution described in embodiments of the present application is applicable to a battery and an electrical apparatus using the battery.

Among them, the electrical apparatus may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. No special limitation is imposed on the electrical apparatus in the embodiments of the present application.

It can be understood that the battery disclosed in embodiments of the present application can be used, but not limited to, in an electrical apparatus, such as a vehicle, a ship, or an aircraft. The battery disclosed in the present application and the like can be used to form the power source system of the electrical apparatus, so that it is possible to avoid the influence of the bottom impact on the battery, and to improve the safety and reliability of the battery. On this basis, the following embodiments of the present application and the accompanying drawings will be illustrated by taking an example in which this battery is used as a power battery for a vehicle, but it should be understood that the present application is not limited to this, and that the battery provided by the embodiments of the present application can be applied to other scenarios in which the bottom may be shocked, and can be protected together with it.

For the convenience of illustration, the following embodiments are also illustrated using the example in which the electrical apparatus is a vehicle.

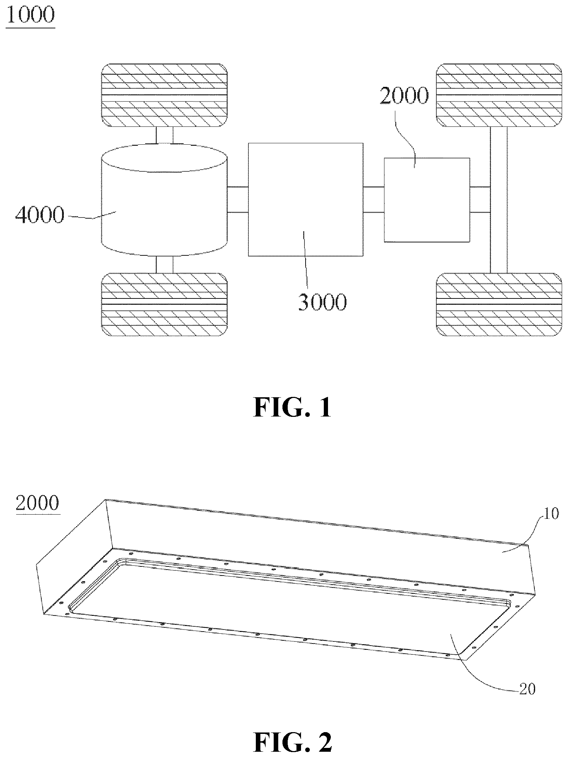

Fig. 1 is a schematic structural diagram of a vehicle provided in some embodiments of the present application. As shown in Fig. 1, the vehicle 1000 is provided with a battery 2000 inside, and the battery 2000 can be provided at the bottom or head or tail of the vehicle 1000. The battery 2000 may be used to power the vehicle 1000. For example, the battery 2000 may be used as an operating power source of the vehicle 1000.

The vehicle 1000 may further comprise a controller 3000 and a motor 4000, wherein the controller 3000 is used to control the battery 2000 to power the motor 4000, for example, for the operating power demand when the vehicle 1000 is starting, navigating and driving.

In some embodiments of the present application, the battery 2000 not only can serve as an operating power source of the vehicle 1000, but also can serve as a driving power source of the vehicle 1000, thus replacing or partially replacing fuel or natural gas to provide driving power for the vehicle 1000.

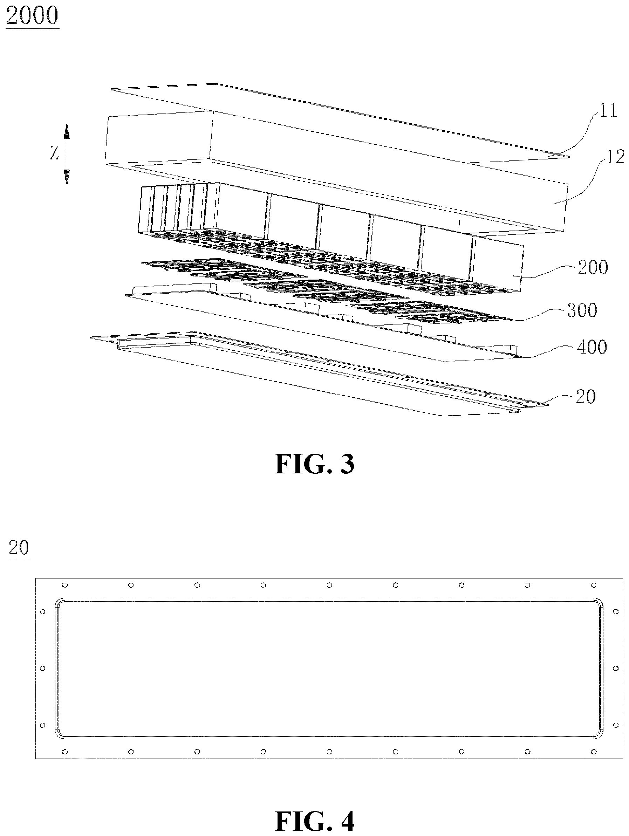

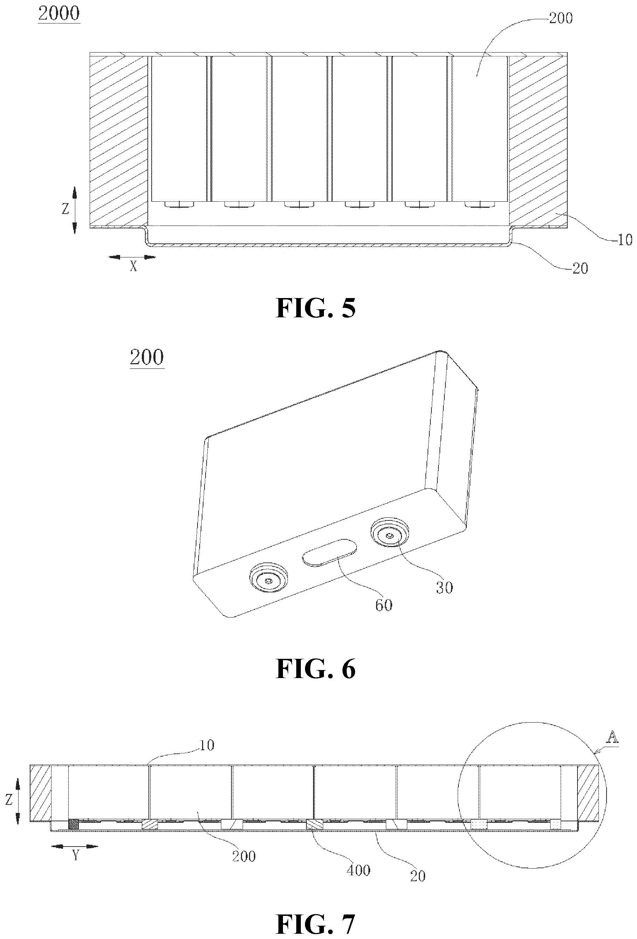

Referring together to Figs. 2 to 6, wherein Fig. 2 is a schematic structural diagram of a battery provided in some embodiments of the present application; Fig. 3 is an exploded view of a battery provided in an embodiment of the present application; Fig. 4 is a schematic structural diagram of a bottom provided in an embodiment of the present application; Fig. 5 is a schematic cross-sectional diagram of a battery provided in an embodiment of the present application; and Fig. 6 is a schematic structural diagram of a battery cell provided in another embodiment of the present application.

The present application provides a battery 2000, comprising a box 100, a battery cell 200, a busbar component 300, and a protective assembly 400, wherein the box 100 has a top 10 and a bottom 20 opposite in a first direction Z, and the battery cell 200 is disposed upside down in the box 100 and connected to the top 10, and the battery cell 200 comprises electrode terminals 30, the electrode terminals 30 being disposed back away from the top 10 in the first direction Z; the busbar component 300 is used for electrically connecting to the electrode terminals 30 of at least two battery cells 200; and the protective assembly 400 is disposed between the bottom 20 and the busbar component 300, and the protective assembly 400 is used for supporting the battery cell 200 and insulating the battery cell 200 from the bottom 20.

The battery 2000 provided in embodiments of the present application has the box 100 formed by snapping together the top 10 and the bottom 20, and there are the battery cell 200, the busbar component 300, and the protective assembly 400 disposed inside the box 100 sequentially in a direction pointing from the top 10 to the bottom 20, wherein the busbar component 300 is disposed separately in connection with the plurality of battery cells 200, and can form electrical connections between the plurality of battery cells 200, and the protective assembly is disposed between the battery cells 200 and the bottom 20, which can make the battery cells 200 and the bottom 20 maintain a certain distance from each other, and at the same time make the two electrically insulated, thereby preventing the battery cells 200 from being adversely affected when the bottom 20 is subjected to external impacts or electrical disturbances.

Among them, the box 100 comprises the top 10 and the bottom 20, and in embodiments of the present application, there can be a detachable connection between the top 10 and the bottom 20 so as to facilitate the disposing of the battery cell 200 and other components in the interior of the box 100, wherein the detachable connection can be a connection by screws, which means that through-holes penetrating through the bottom 20 can be provided at the positions where the bottom 20 is connected to the top 10, and corresponding screw-holes can be provided at the corresponding positions of the top 10, and that a tightening connection can be carried out by screws. Optionally, the top 10 can be integrally molded with components such as the carrier chassis on which the battery 2000 is integrated, whereby the strength of the box 100 can be further improved and the connection can be made stable.

It can be understood that in embodiments of the present application, the box 100 is used for accommodating and protecting the components disposed therein, such as the battery cell 200, and on this basis, the box 100 can have different structures. In some optional embodiments, the top 10 and the bottom 20 may be capped with each other to collectively define a cavity for accommodating the components such as the battery cell 200. Among other things, the top 10 may be of a hollow structure with an opening at one end, while the bottom 20 may be of a plate-like structure and capped on the open side of the top 10 to form a corresponding cavity for accommodating the components, such as the battery cell 200; alternatively, the top 10 and the bottom 20 may both be of a hollow structure with an opening at one side, i.e., the interface between the top 10 and the bottom 20 may be situated in the middle of the battery cell 200, in which case the open side of the top 10 is joined to the open side of the bottom 20 to form a corresponding cavity for accommodating the components, such as the battery cell 200. Of course, the top 10 and the bottom 20 can be of a variety of shapes, such as cylindrical, rectangular, etc., as long as the two can be matched and connected to each other.

In order to improve the sealing performance of the top 10 and the bottom 20 after connection, in embodiments of the present application, the top 10 and the bottom 20 can be connected by flanges or, alternatively, a sealing member can be provided at the connection, for example, a sealant, a sealing ring, and so on.

In embodiments of the present application, the battery cell 200 is used to store and provide electrical energy, and there can be a plurality of battery cells 200 disposed in the box 100 at the same time, and the plurality of battery cells 200 can be arranged in an array. Optionally, in the battery 2000, there may be a plurality of battery cells 200. If there are a plurality of battery cells 200, the plurality of battery cells 200 can be connected in series or parallel or in parallel-series connection, wherein the parallel-series connection means that the plurality of battery cells 200 are connected in both series and parallel. The plurality of battery cells 200 can be directly connected together in series or in parallel or in parallel-series connection, or, of course, the plurality of battery cells 200 can first be connected in series or in parallel or in parallel-series connection to form a battery module, and then a plurality of battery modules can be connected in series or in parallel or in parallel-series connection to form a whole and be accommodated within the box 100.

In embodiments of the present application, the battery cell 200 is installed in an upside-down pose, that is, a flat bottom surface in the battery cell 200 that is on an opposite side to the top surface provided with the electrode terminals 30 is disposed to be interconnected with the top 10, so that the electrode terminals 30 are positioned on the side that is away from the top 10, whereby the structural strength of the top of the battery 2000 can be effectively improved, and by connecting the bottom of the battery cell 200 with the top 10, the utilization rate of space inside the box 100 can be increased, thereby improving the energy density of the battery 2000 as a whole.

In embodiments of the present application, the busbar component 300 is disposed to be connected to the battery cell 200, wherein the busbar component 300 can be a CCS (Cells Contact System) assembly, that is, an integrated wiring harness consisting of a flexible circuit board, plastic structural members, a busbar, etc., for forming the desired electrical connection relationship between the plurality of battery cells 200, wherein the battery cell 200 can be charged and discharged through the busbar component 300. Optionally, in embodiments of the present application, the busbar component 300 may be welded and connected to the electrode terminals 30 of the battery cell 200, thereby making the connection between the busbar component 300 and the battery cell 200 fixed.

Optionally, in embodiments of the present application, the busbar component 300 may comprise a plurality of assemblies, wherein each of the assemblies is correspondingly disposed to be connected to a battery module consisting of the battery cells 200, respectively, and then these assemblies are electrically connected to form the desired series/parallel/parallel-series connection relationship, or in embodiments of the present application, the busbar component 300 may be disposed as a whole and connected to each of the battery cells 200 separately through the same assembly.

In embodiments of the present application, the protective assembly 400 is disposed between the bottom 20 and the busbar component 300 to support the battery cell 200, that is, the upper and lower sides of the protective assembly 400 may be respectively abutted against a partial area of the battery cell 200 that is not covered by the busbar component 300 as well as the bottom 20, so as to provide the battery cell 200 with a support force in the first direction Z. At the same time, the protective assembly 400 can enable the battery cell 200 and the bottom 20 to have a certain gap therebetween and not in contact with each other, and thus enable the busbar component 300 connected to the battery cell 200 to be also kept at a certain spacing from the bottom 20, so that the busbar component 300 and the battery cell 200 are both disposed to be insulated from the bottom 20, thereby preventing the exposed bottom 20 from being interfered with by the external environment, which may cause electrical interference to the battery cell 200 and the busbar component 300.

Further, the protective assembly 400 may have a flat surface extending perpendicular to the first direction Z, such that an additional protective layer is provided on the bottom 20 of the box 100, thereby further reducing the influence on the battery cell 200 and the busbar component 300 when the bottom 20 is subjected to an impact.

In the battery 2000 provided in embodiments of the present application, the battery cell 200 is disposed upside down in the interior of the box, and by connecting the flat bottom of the battery cell 200 that is not provided with other parts to the top 10 of the box 100, it is possible to improve the structural strength of the top of the battery 2000 as a whole, and at the same time, there is also a protective assembly 400 disposed between the bottom 20 of the box 100 and the busbar component 300, wherein the protective assembly 400 can function to provide support for the battery cell 200, so that the battery cell 200 and the busbar component 300 are both kept at a certain spacing from the bottom 20, thereby ensuring safety of the battery 2000 as a whole in the event of a bottom impact.

In some optional embodiments, the battery cell 200 is bonded and fixed to the top 10.

In embodiments of the present application, the battery cell 200 may be fixedly connected to the top 10, specifically, they may be adhesively fixed, and by means of the bonding connection, it is possible to reduce the dimensions required in the first direction Z when connecting the battery cell 200 to the top 10, thereby reducing the overall thickness of the battery 2000. By fixedly connecting the battery 200 to the top 10, the strength of the top of the battery can be further improved.

In some optional embodiments, the top 10 includes a top plate 11 and a frame 12, the frame 12 being disposed surrounding multiple battery cells 200, and the frame 12 being used to connect the top plate 11 to the bottom 20.

In embodiments of the present application, the box 100 includes the top 10 and the bottom 20 that are snapped with each other, and on this basis, the top 10 can be composed of two parts: the top plate 11 and the frame 12, where the top plate 11 may extend along a plane perpendicular to the first direction Z, and the top plate 11 may be integrated into a component such as a chassis to which the battery 2000 is to be connected; and the frame 12 is disposed parallel to the first direction Z and surrounding the component such as the battery cell 200, and at the same time, the frame 12 may be fixedly connected or detachably connected to the top plate 11. Optionally, in embodiments of the present application, the frame 12 may extend in the first direction Z by a distance greater than the distances that the battery cell 200, the busbar component 300, and the protective assembly 400 extend in the first direction Z, in which case the bottom 20 may be capped over the lower end of the frame 12. The frame 12 disposed surrounding the battery cell 200 can provide protection for the battery cell 200 on the side edges, which improves its safety and makes it easier to perform machining.

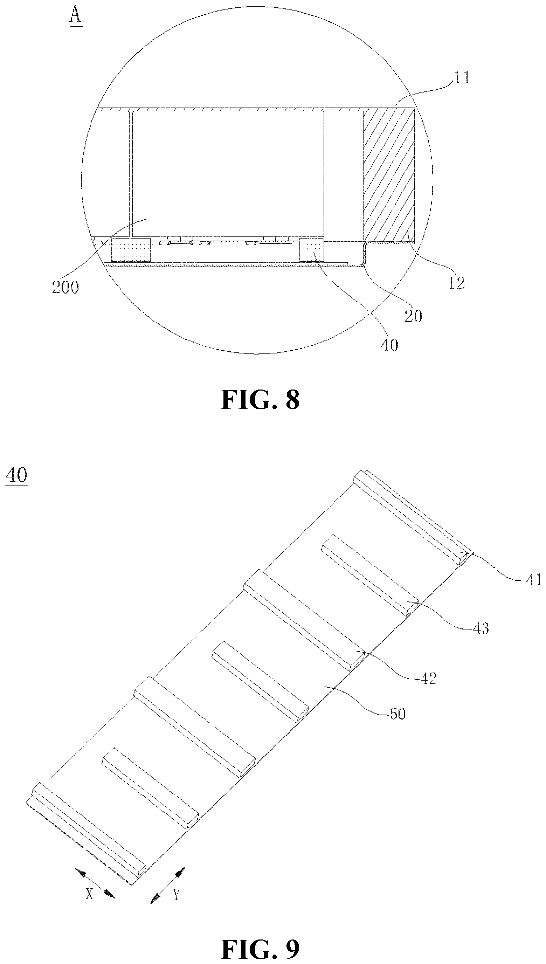

Referring together to Figs. 7 through 9, wherein Fig. 7 is a schematic cross-sectional view of a battery provided in an embodiment of the present application, Fig. 8 is an enlarged diagram of area A in Fig. 7, and Fig. 9 is a schematic structural diagram of a protective assembly provided in an embodiment of the present application.

In some optional embodiments, the protective assembly 400 comprises a plurality of protective members 40 extending in a second direction X, the plurality of protective members 40 being disposed at intervals in a third direction Y and the battery cell 200 being abutted against the protective members 40, with the first direction Z, the second direction X, and the third direction Y intersecting with each other.

In embodiments of the present application, the protective assembly 400 can include a plurality of protective members 40, wherein these protective members 40 are abutted against the plurality of battery cells 200, respectively, so that the battery cells 200 and the bottom 20 of the box 100 can maintain a certain distance from each other, thus reducing the influence of the impact on the bottom 20 on the battery 2000.

Optionally, in embodiments of the present application, the protective member 40 can be abutted against the surface of the battery cell 200 that is provided with the electrode terminals 30, specifically, it can be abutted against a partial area, which is capable of being subjected to a force, of the surface of each battery cell 200 that is provided with the electrode terminals 30 except for the area in which the electrode terminals 30 are located, that is, be abutted against "shoulders" in that surface in the first direction Y on two sides of the electrode terminals 30. On this basis, it is necessary to dispose the protective members 40 in positions corresponding to the battery cells 200, and in embodiments of the present application, the plurality of battery cells 200 may be arranged in an array, and correspondingly, the protective members 40 may extend along the second direction X and arranged along the third direction Y to form spaced-apart parallel disposed strip-like structural bodies. Except for the protective members 40 located at the edges, the other protective members 40 can be provided at the positions where the adjacent battery cells 200 adjoin, i.e., each protective member 40 may be abutted against two battery cells 200 that are disposed adjacent to each other in the third direction Y at the same time.

Optionally, in embodiments of the present application, the first direction Z, the second direction X and the third direction Y may be perpendicular to each other in pairs to form a relatively regular structure that is easy to machine.

In some optional embodiments, orthographic projections of the electrode terminals 30 to the bottom 20 are located between orthographic projections of the protective members 40 adjacent thereto to the bottom 20.

In embodiments of the present application, the protective assembly 400 comprises a plurality of protective members 40, these protective members 40 being abutted against the battery cells 200, where the orthographic projections of the electrode terminals 30 in the battery cell 200 to the bottom 20 may be located between those of the protective members 40 adjacent thereto. At this time, the protective members 40 are abutted against the shoulders of the battery cell 200, which can allow the connections between the electrode terminals 30 and the busbar component 300 to be unobstructed by the protective assembly 400, and allow the electrode terminals 30 to fall between adjacent protective members 40 after the battery cell 200 has been lifted by the protective assembly 400, so that the force generated by an impact can be dispersed to a plurality of battery cells 200, thereby avoiding the electrode terminals 30 from being damaged by the impact.

In some optional embodiments, the plurality of protective members 40 comprise edge protective members 41, first protective members 42, and second protective members 43, wherein along the third direction Y, the edge protective members 41 are disposed at edges on the two sides of an assembly composed of battery cells 200 arranged in an array, and the first protective members 42 and the second protective members 43 are distributed alternately between two edge protective members 41.

In embodiments of the present application, the protective members 40 may include three types of protective members separately disposed at different positions, where the edge protective members 41 are disposed at the edge positions of the battery cell 200, and the first protective members 42 and the second protective members 43 are disposed alternately between the edge protective members 41. The first protective members 42 and the second protective members 43 may be of different sizes to match a variety of different connecting elements in the busbar component 300 and to provide the desired space for connections between adjacent battery cells 200.

Optionally, in embodiments of the present application, the protective members 40 may include a plurality of different sizes, and the size of each protective member 40 may be adjusted accordingly based on the length of the battery cell 200 and the positions of the electrode terminals 30 and the pressure relief structure 60 thereon, and when each protective member 40 is abutted against a plurality of battery cells 200, each protective member 40 may be abutted between two adj acent battery cells 200. In this case, the spacings between the first protective members 42 and the second protective members 43 may be approximate to the length of the battery cell 200 itself, and the first protective members 42 and the second protective members 43 arranged alternately can be coordinated with the arrangement of the busbar component 300 to form a safe and reliable electrical connection loop.

In some optional embodiments, along the second direction X, an extension length of the first protective members 42 is greater than an extension length of the second protective members 43.

As previously described, in embodiments of the present application, the first protective member 42 and the second protective member 43 may have different lengths in their own extension directions, and gaps between second protective members 43 adjacent may be provided between battery cells 200 to form a rigid connecting element, such as a busbar, for electrical connection, and two battery cells 200 adjacent in the third direction Y are electrically connected by this connecting element, that is, by adjusting the length of the second protective members 43 and the spacing between the second protective members 43 adjacent in the second direction X, the rigid connecting element in the busbar component 300 is avoided.

Optionally, depending on the positions at which the connecting elements between the battery cells 200 are disposed, the extension length of the first protective members 42 along the second direction X may be the same as the length of the inner cavity of the box 100 in that direction, that is, they extend integrally and completely inside the box 100, or the first protective members 42 may be provided with broken openings in the second direction X, so that the corresponding connecting elements are disposed at the broken openings. By disposing the connecting elements located in the busbar component 300 at the broken openings of the protective members 40, it is possible to keep the connecting elements also at a certain spacing from the bottom 20, so as to create protection against shocks and to maintain the insulation.

In some optional embodiments, along the third direction Y, the width of the first protective members 42 is greater than the width of the second protective members 43, and the width of the second protective members 43 is greater than the width of the edge protective members 41.

In embodiments of the present application, the protective members 40 may include the edge protective members 41 disposed at the edges and the first protective members 42 and the second protective members 43 disposed alternately between the edge protective members 41, wherein the edge protective members 41 are each abutted against only one battery cell 200, and thus their width may be smaller than those of the first protective members 42 and the second protective members 43, and the first protective members 42 and the second protective members 43 may be disposed at the connections of the neighboring battery cells 200 and are abutted against a plurality of battery cells 200 at the same time. By making each first protective member 42 to be abutted against two adjacent battery cells 200 at the same time, it is possible to reduce the number of protective members 40 required, thereby increasing the production efficiency.

Optionally, in the battery 2000 provided in embodiments of the present application, the width and position of each protective member 40 in the protective assembly 400 can be designed based on the position and size of a partial area of the battery cell 200 that is not capable of being disposed in an overlapping manner with the protective assembly 400. Specifically, the width of the protective members 40 can be selected according to the magnitude of the pressure intensity that the battery cell 200 is capable of carrying and the magnitude of the shock that is expected to possibly occur, and then the positions at which the protective members 40 are disposed can be selected according to the positions of the electrode terminals 30 and the pressure relief mechanism 60.

In some optional embodiments, an extension length of the protective assembly 400 in the first direction Z is greater than 1.5 mm.

In embodiments of the present application, the protective assembly 400 needs to extend in the first direction Z by a certain dimension, i.e., each protective member 40 needs to have a certain thickness, and the protective assembly 400 is used to provide the battery cell 200 with protection against impacts from below, so the relationship between the thickness of the protective assembly 400 itself and the shock energy has a large influence on whether or not there will be a fire and explosion of the battery 2000 or other safety issues. On this basis, the protective assembly 400 needs to have a certain basic thickness to provide a corresponding strength of protection, and exemplarily, the overall thickness of the protective assembly 400 may be greater than 1.5 mm in embodiments of the present application.

In some optional embodiments, the protective assembly 400 further comprises a connecting plate 50, the plurality of protective members 40 being separately disposed on a surface of the connecting plate 50 towards the top 10.

In embodiments of the present application, the plurality of protective members 40 can all be connected to the same connecting plate 50, and the connecting plate 50 is disposed close to the bottom 20. By means of the connecting plate 50, the relative positions between the plurality of protective members 40 can be stabilized, thus avoiding misalignment thereof after being impacted. At the same time, the connecting plate 50 may be disposed extending in the same direction as the bottom 20 and abutted against the bottom 20, and may be further position-limited by grooves or the like disposed on the bottom 20, and the connecting plate 50 is disposed between the protective members 40 and the bottom 20 and extends to cover a large area, whereby the performance of insulation of the busbar component 300 and the battery cell 200 from the bottom 20 of the box 100 can be improved. Optionally, in order to provide the desired strength of protection, the thickness of the connecting plate 50 may be greater than 0.5 mm.

In some optional embodiments, the frame 12 and the top plate 11 are disposed by means of a welding connection, a flow drill screw connection, a bonding connection, or an integral molding.

In embodiments of the present application, the box 100 may include the top plate 11, the frame 12, and the bottom 20, wherein the frame 12 is disposed surrounding the circumference of the battery cell 200. At the same time, in order to improve the overall strength of the box 100, there may be a fixed connection between the frame 12 and the top plate 11, and at this connection, there may be a welding connection, an FDS (flow drill screw) connection, or a bonding connection, and the present application does not impose any specific limitations in this regard as long as it is ensured that there is sufficient connection strength between the top plate 11 and the frame 12.

In some optional embodiments, the protective assembly 400 is bonded and fixed to the battery cell 200.

In embodiments of the present application, the protective assembly 400 is abutted against the shoulders of the battery cell 200, at which time the two can be bonded and fixed together to further improve the overall strength and the stability of the connection, thereby avoiding misalignment between the protective assembly 400 and the battery cell 200 when subjected to a shock. Optionally, in the protective assembly 400, each of the protective members 40 may be separately bonded to a corresponding position on the battery cell 200, or at least some of the protective members 40 may be bonded to the battery cell 200, which may include the edge protective members 41.

As shown in Fig. 6, in some optional embodiments, the battery cell 200 further comprises a pressure relief mechanism 60, wherein the pressure relief mechanism 60 is disposed on the same side as the electrode terminals 30.

In embodiments of the present application, the battery cell 200 may further have the pressure relief mechanism 60, wherein the pressure relief mechanism 60 can form a weak point when high pressure and expansion are generated inside the battery cell 200, so that internal pressure exceeding a certain threshold can be relieved through this point, thereby avoiding serious safety problems such as explosion of the battery cell 200 as a whole. On this basis, the pressure relief mechanism 60 should be prevented from collision as much as possible, and the pressure relief mechanism 60 is also arranged at the lower side of the battery cell 200, so that it can be protected together with the electrode terminals 30 to avoid collision with the box 100 and the like, thereby improving the overall safety and reliability of the battery 2000.

In some optional embodiments, an orthographic projection of the pressure relief mechanism 60 to the bottom 20 is located between orthographic projections of the protective members 40 adjacent thereto to the bottom 20.

As previously described, in embodiments of the present application, the battery cell 200 further comprises the pressure relief mechanism 60, and when the battery cell 200 is cooperating with the protective assembly 400, the pressure relief mechanism 60 can be disposed to be located between the areas where adjacent protective members 40 and the battery cell 200 are abutted against each other, i.e., the pressure relief mechanism 60 is disposed on a side close to the bottom 20 and does not come into contact with the protective assembly 400, whereby in the event of an external shock, the impact force will be dispersed over the shoulders of the battery cell 200 to prevent damage of the pressure relief mechanism 60 due to a collision, thus improving the safety of the battery 2000.

In some optional embodiments, the protective assembly 400 is of an insulating material, or the protective assembly 400 is coated with an insulating coating.

In embodiments of the present application, the protective assembly 400 is disposed between the busbar component 300 and the bottom 20 to support the battery cell 200 and insulate both the battery cell 200 and the busbar component 300 from the bottom 20, so as to avoid electrical interference from the external environment. On this basis, the protective assembly 400 can be made of an insulating material as a whole, which can ensure a good insulating effect; alternatively, the protective assembly 400 can be made by applying an insulating coating to a conductive material having a certain strength, which can improve the strength of the protective assembly 400 itself and optimize the protection effect, thus improving the bearing capacity of the battery 2000 as a whole against bottom impacts.

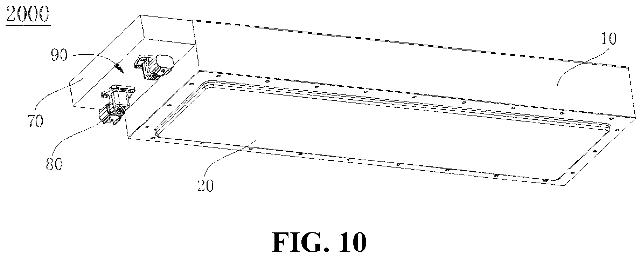

Referring to Fig. 10. Fig. 10 is a schematic structural diagram of a battery provided in yet another embodiment of the present application. In some optional embodiments, the battery 2000 further comprises an adapter plate 70 and an adapter 80, wherein the adapter plate 70 is disposed on one side of the box 100 and is disposed to protrude from the box 100, and the adapter plate 70 is connected to the bottom 20 to form an accommodating part 90, the adapter 80 is disposed in the accommodating part 90 and being connected to the adapter plate 70.

In embodiments of the present application, the battery 2000 may further comprise the adapter plate 70 and the adapter 80, wherein the adapter plate 70 is disposed to be connected to the box 100, and the box 100 has the top 10 and the bottom 20 opposite in the first direction Z, and the battery cell 200, the busbar component 300, and the protective assembly 400 are disposed in the box 100 in sequence. The adapter plate 70 is disposed to protrude from one side of the box 100 in the third direction Y and is connected to the top 10 in the first direction Z with a step difference to form the accommodating part 90. The adapter 80 is disposed to be connected to the adapter plate 70 in the accommodating part 90, and the adapter 80 is not beyond the extension surface of the bottom 20 in the third direction Y.

In embodiments of the present application, the adapter plate 70 is a boss protruding from one side of the box 100 in the third direction Y, which is connected to the bottom 20 with a step difference in the first direction Z. This means, specifically, that the adapter plate 70 has a difference in the first direction Z from the box 100 in terms of the extension dimension. The accommodating part 90 is a space generated by this thickness difference and formed by the side where the adapter plate 70 adjoins the box 100 in order for the adapter 80 to be provided therein, and the extension dimension of the adapter 80 in the first direction Z is less than or equal to the extension dimension of the box 100.

In embodiments of the present application, the adapter plate 70 can be perpendicular to or have an angle with the extension direction of the side wall of the box 100, but can not extend parallel to the box 100 so that the adapter 80 is disposed within the accommodating part 90 between the adapter plate 70 and the box 100.

In the third direction Y, the adapter plate 70 protrudes beyond the box 100 from one side of the box 100 and is connected to the bottom 20 of the box 100 with a step difference in the first direction Z to form the accommodating part 90, i.e., the accommodating part 90 is an accommodating space formed by the adapter plate 70 and the box 100 together. The adapter 80 is disposed in the accommodating part 90 which can function to protect the adapter 80, thus reducing the shock force on the adapter 80 in a collision. Moreover, the adapter 80 may not be beyond the extension dimension of the box 100 in the first direction Z, so that the adapter 80 is located entirely within the accommodating part 90 in order to avoid contact with external apparatuses located in the circumference of the battery 100, thereby reducing the influence caused by external shocks in the process of electrically connecting the battery cell 200 to the external apparatuses by the adapter 80.

In some embodiments of the present application, the surface on the side of the adapter plate 70 backing away from the accommodating part 90 may be located at the same horizontal plane as the surface on the side of the top plate 11 backing away from the frame 12, i.e., the adapter plate 70 may be located at the same horizontal plane as the top surface of the box 100, and when the adapter plate 70 is integrally disposed with the box, the adapter plate 70 may be formed by horizontally stretching the top plate of the box 100 outwardly, and when the battery 2000 is integrally disposed with the external apparatus such as the carrier chassis, the adapter plate 70 and the top plate 11 may be fixed to the same surface of the external apparatus, or the adapter plate 70 and the top plate 11 may be integrally disposed with the same external apparatus. By arranging the surfaces on the respective sides of the adapter plate 70 and the top plate 11 to be located at the same horizontal plane, it is possible to increase the strength of the bearing force of both of them as described before, thereby further improving the bearing force and the strength of the top of the battery 2000.

Optionally, the adapter plate 70 has a certain thickness in the first direction Z. When the bottom or side of the battery 2000 is subj ected to a collision, the surface on the side of the adapter plate 70 backing away from the box 100 may be subjected to a certain shock force. On this basis, by arranging the adapter plate 70 to have a certain thickness, the stiffness of the adapter plate 70 itself can be enhanced, which in turn can play a better protective role for the adapter 80 by means of the accommodating part 90 that is supported by the adapter plate 70 and the box 100 together.

Optionally, the adapter plate 70 may be disposed in an integrally molded manner with the box 100, or the adapter plate 70 may be positioned and connected with the box 100 by means of a fixed connection approach, such as a welding connection, a bonding connection, or an FDS connection, and the present application does not impose any specific limitations in this regard.

In embodiments of the present application, the adapter plate 70 has a first surface facing the accommodating part 90, while the box 100 has a second surface facing the accommodating part 90, wherein the first surface and the second surface may be perpendicular to each other, i.e., the surface on the side of the adapter plate 70 on which the adapter 80 is provided may be perpendicular to the side wall of the box 100. By making the first surface and the second surface perpendicular to each other, it is possible to maximize the accommodating part 90 sandwiched therebetween, thereby expanding the mounting space for the adapter 80.

Further, the adapter 80 is connected to the first surface and disposed spaced apart from the second surface, i.e., the adapter 80 may start from the adapter plate 70 and extend along the first direction Z, so that it is overhanging in the accommodating part 90 without coming into contact with the second surface, thereby reducing the likelihood that the adapter 80 will be subjected to a shock in a collision, and at the same time, the adoption of such a structure can facilitate the electrical connections between the adapter 80 and other external apparatuses and, in comparison to the disposing of the adapter 80 in the horizontal direction, such a structure can enable the adapter 80 to have a better force-bearing performance.

In some optional embodiments, the box 100 may also have cooling channels embedded in its interior, and based on the connection arrangement of the battery cell 200 to the top 10 of the box 100, the bottom of the battery cell 200 and the top 10 may be in contact with each other for heat transfer. In order to further improve the performance of the battery 2000, a cooling channel may be embedded in the top 10 at a position where it is connected to the battery cell 200, and a gas or liquid required for cooling flows therein, so as to achieve an exchange of heat with the battery 2000 when it is working, and to play the role of cooling down the battery, thereby extending the overall service life of the battery 2000 and enabling it to be applied to a wider range of usages.

Further, in some optional embodiments, the cooling channel may also be provided as a plurality of cooling panels in the battery cell 200 or between the battery cell 200 and the box 100, and the inlets and outlets of these cooling panels for circulating the cooling medium may be uniformly connected and connected to other components for storage, circulation, and heat release of the cooling medium via through holes provided on the box 100, and the present application does not impose any specific limitations in this regard.

As shown in Fig. 3, embodiments of the present application provide a battery 2000 that comprises a box 100, wherein the box 100 has a top 10 and a bottom 20 that are snapped with each other, and inside the box 100, a battery cell 200, a busbar component 300, and a protective assembly 400 are provided in sequence in a direction pointing from the top 10 to the bottom 20. The battery cell 200 is disposed upside down in the box 100 and is disposed to be connected to the top 10, the electrode terminals 30 and the pressure relief mechanism 60 for a plurality of battery cells 200 arranged in an array are all disposed on a side proximate to the bottom 20, the busbar component 300 is electrically connected to at least two of the electrode terminals 30, and the protective assembly 400 is used to support the battery cell 200 and to insulate it from the bottom 20. The protective assembly 400 comprises edge protective members 41 provided on both sides thereof in the third direction Y as well as first protective members 42 and second protective members 43 provided alternately between the edge protective members 41, and along the second direction X, an extension dimension of the second protective members 43 is less than or equal to an extension dimension of the first protective members 42, while along the third direction Y, a width of the first protective members 42 is greater than or equal to a width of the second protective members 43, which is greater than or equal to a width of the edge protective members 41.

In a second aspect, embodiments of the present application further provide an electrical apparatus comprising the battery 2000 of any of the embodiments in the first aspect. As previously described, the battery 2000 may be used as a driving power source or a control power source for the electrical apparatus.

The electrical apparatus provided in embodiments of the present application has all the beneficial effects of the aforementioned battery 2000, for which the reference can be made specifically to the specific description of the battery 2000 in the aforementioned embodiments, which will not be repeated here in this embodiment.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery, comprising:
a box having a top and a bottom opposite in a first direction;
a battery cell disposed upside down in the box and connected to the top, wherein the battery cell comprises electrode terminals, the electrode terminals being disposed back away from the top in the first direction;
a busbar component for electrically connecting to the electrode terminals of at least two said battery cells; and
a protective assembly disposed between the bottom and the busbar component, wherein the protective assembly is used to support the battery cell and insulating the battery cell from the bottom.

2. The battery according to claim 1, wherein the battery cell is bonded and fixed to the top.

3. The battery according to claim 1 or 2, wherein the top comprises a top plate and a frame, the frame being disposed surrounding multiple said battery cells, and the frame being used to connect the top plate and the bottom.

4. The battery according to any one of claims 1 to 3, wherein the protective assembly comprises a plurality of protective members extending in a second direction, the plurality of the protective members being disposed at intervals in a third direction and the battery cell being abutted against the protective members, with the first direction, the second direction, and the third direction being arranged to intersect with each other.

5. The battery according to claim 4, wherein orthographic projections of the electrode terminals to the bottom are located between orthographic projections of the protective members adjacent thereto to the bottom.

6. The battery according to claim 5, wherein the plurality of protective members comprise edge protective members, first protective members, and second protective members, wherein along the third direction, the edge protective members are disposed at edges on the two sides of an assembly of battery cells arranged in an array, and the first protective members and the second protective members are distributed alternately between two said edge protective members.

7. The battery according to claim 6, wherein along the second direction, an extension length of the first protective members is greater than an extension length of the second protective members.

8. The battery according to claim 7, wherein along the third direction, the width of the first protective members is greater than the width of the second protective members, and the width of the second protective members is greater than the width of the edge protective members.

9. The battery according to claim 7, wherein an extension length of the protective assembly in the first direction is greater than 1.5 mm.

10. The battery according to any one of claims 4 to 9, wherein the protective assembly further comprises a connecting plate, the plurality of protective members being separately disposed on a surface of the connecting plate towards the top.

11. The battery according to claim 3, wherein the frame and the top plate are disposed by means of a welding connection, a flow drill screw connection, a bonding connection, a fastener connection, or an integral molding.

12. The battery according to any one of claims 1 to 10, wherein the protective assembly is bonded and fixed to the battery cell.

13. The battery according to any one of claims 1 to 12, wherein the battery cell further comprises a pressure relief mechanism, the pressure relief mechanism being disposed on the same side as the electrode terminals.

14. The battery according to claim 13, wherein an orthographic projection of the pressure relief mechanism to the bottom is located between orthographic projections of the protective members adjacent thereto to the bottom.

15. The battery according to any one of claims 1 to 14, wherein the protective assembly is of an insulating material, or the protective assembly is coated with an insulating coating.

16. The battery according to any one of claims 1 to 15, wherein the battery further comprises an adapter plate and an adapter, wherein the adapter plate is disposed on one side of the box and is disposed to protrude from the box, and the adapter plate is connected to the bottom to form an accommodating part, and the adapter is disposed in the accommodating part and is disposed to be connected to the adapter plate.

17. An electrical apparatus, comprising a battery of any one of claims 1-16.
